## Europäisches Patentamt
## European Patent Office
## Office européen des brevets

(19)

(11) Veröffentlichungsnummer: **0 182 380**
**B1**

(12) **EUROPÄISCHE PATENTSCHRIFT**

(45) Veröffentlichungstag der Patentschrift: **06.02.91**

(51) Int. Cl.⁵: **C 02 F 3/30, C 02 F 3/08**

(21) Anmeldenummer: **85114792.6**

(22) Anmeldetag: **21.11.85**

(54) **Verfahren und Vorrichtung zur biologischen Behandlung von Wasser, insbesondere zur Denitrifikation von Rohwasser zur Trinkwasseraufbereitung.**

(30) Priorität: **22.11.84 DE 3442510**
**22.12.84 DE 3447177**

(43) Veröffentlichungstag der Anmeldung:
**28.05.86 Patentblatt 86/22**

(45) Bekanntmachung des Hinweises auf die Patenterteilung:
**06.02.91 Patentblatt 91/06**

(84) Benannte Vertragsstaaten:
**BE DE FR IT LU NL**

(56) Entgegenhaltungen:
**DE-A-1 784 892**
**DE-A-3 208 173**
**GB-A-1 432 965**
**US-A-3 869 380**

(73) Patentinhaber: **Norddeutsche Seekabelwerke Aktiengesellschaft**
**Kabelstrasse**
**D-2890 Nordenham (DE)**

(72) Erfinder: **Sieksmeyer, Folf**
**Oststrasse 13**
**D-2890 Nordenham (DE)**
Erfinder: **Wittek, Jürgen, Dr.**
**Amalienweg 5**
**D-2890 Nordenham (DE)**

(74) Vertreter: **Bolte, Erich, Dipl.-Ing. et al**
**c/o Meissner, Bolte & Partner Patentanwälte**
**Hollerallee 73**
**D-2800 Bremen 1 (DE)**

Courier Press, Leamington Spa, England.

**Beschreibung**

Die Erfindung betrifft ein Verfahren zur Trinkwasseraufbereitung durch Denitrifikation von Rohwasser, insbesondere Grundwasser, gemäß dem Oberbegriff des Anspruchs 1. Des weiteren betrifft die Erfindung eine entsprechende Vorrichtung gemäß dem Oberbegriff des Anspruchs 3.

Das zur Gewinnung von Trinkwasser dienende Rohwasser, z. B. Grundwasser, wird in zunehmendem Maße durch Umwelteinflüsse belastet. Vor allem Nitrate gelangen durch Düngemittel, Gülleaufbringung oder dergleichen ins Grundwasser. Das daraus gewonnene Trinkwasser muß daher vor dem Verzehr zumindest so weit vom Nitrat befreit (denitrifiziert) werden, daß es den gesetzlichen Anforderungen entspricht. Gleichermaßen kann es erforderlich werden, aufbereitete Betriebswässer zu denitrifizieren.

Aus der Praxis ist eine mehrstufige Denitrifikation bekannt, bei der das nitrathaltige Rohwasser unter Zusatz von als Reduktionsmittel dienenden Nährstoffen, beispielsweise Äthanol, Glucose oder dergleichen, zunächst in einen anoxischen Reaktor mit statischen Trägermaterialschüttungen geleitet wird. Durch die zugesetzten Nährstoffe bilden sich auf dem Trägermaterial Bakterien, die das Nitrat zu molekularem, gasförmigen Stickstoff reduzieren. Gleichzeitig dienen die Kohlenstoff enthaltenen Nährstoffe zur organischen Kohlenstoffversorgung, nämlich als Energieträger, für die Bakterien im Reaktor. Anschließend werden überschüssige Nährstoffe aerob beseitigt.

Nachteilig an diesem bekannten Verfahren ist der diskontinuierliche Denitrifikationsverlauf. Dieser kommt dadurch zustande, daß die statischen Reaktoren in regelmäßigen Zeitabständen zur Entfernung der überschüssigen Biomasse gespült werden müssen. Außerdem besteht bei ungleichmäßiger Durchströmung der bekannten statischen Trägermaterialfüllung die Gefahr des Verbackens durch Biomasse, infolgedessen unerwünschtes Nitrat entstehen kann. Daher ist in jedem Falle eine aufwendige Verfahrenskombination zur Nachreinigung des denitrifizierten Wassers erforderlich. Daraus resultiert beim bekannten Verfahren eine aufwendige Verfahrenskombination, die eine sorgfältige Prozeßüberwachung und eine intensive Wartung der Anlage erfordert.

Auch in apparativer Hinsicht ist das bekannte Verfahren mit Nachteilen behaftet. Um die Anlage nämlich bei der häufig erforderlichen Spülung der Reaktoren nicht vollständig außer Betrieb nehmen zu müssen, sind mehrere Reaktoren notwendig, von denen alternativ stets ein Reaktor in Betrieb ist, während der andere Reaktor rückgespült wird.

Aus der DE-A-3 208 173 ist ein Verfahren und eine Vorrichtung zur Denitrifikation von Abwasser mittels Tauchtropfkörpern bekannt. Hierbei wird die erste Biostufe abwechselnd als aerobe und als anoxische Stufe betrieben. Es findet also nur im letztgenannten Falle eine Denitrifikation statt. Eine zweite Stufe arbeitet ausschließlich aerob, und zwar zur Nitrifikation. Dadurch, daß das Verfahren und die Vorrichtung nach der DE-A-3 208 173 zur Denitrifikation von Abwasser bestimmt ist, brauchen keine Nährstoffe zugeführt zu werden, weil das Abwasser diese bereits enthält. Insofern herrschen hier andere Bedingungen als bei der Denitrifikation von nahezu Trinkwasserqualität aufweisendem Rohwasser. Weiterhin arbeitet das bekannte Verfahren und die zur Durchführung desselben dienende Vorrichtung diskontinuierlich, da die erste Biostufe abwechselnd zu Nitrifikation bzw. Denitrifikation eingesetzt wird. Schließlich geht es in der zweiten (aeroben) Biostufe der DE-A-3 208 173 nicht um den biologischen Abbau restlicher Nährstoffe aus der ersten anoxischen Biostufe.

Aus der US-A-3 869 380 ist wiederum eine Denitrifikation von Abwässern bekannt, wobei die Denitrifikation unter Verwendung von in den Abwässern enthaltenen Nährstoffen erfolgt. Nährstoffe brauchen daher bei diesem bekannten Verfahren nicht zugesetzt zu werden, so daß es der US-A-3 869 380 an Maßnahmen zur Entfernung überschüssiger Nährstoffe aus dem denitrifizierten Rohwasser fehlt.

Der Erfindung liegt daher die Aufgabe zugrunde, ein einfach beherrschbares, insbesondere kontinuierliches Verfahren und eine einfach aufgebaute, kostengünstige Vorrichtung zur Denitrifikation von Trinkwasser zu schaffen.

Zur Lösung dieser Aufgabe weist das erfindungsgemäße Verfahren die kennzeichnenden Merkmale des Anspruchs 1 auf. Demnach führen die Tauchtrommelreaktoren sowohl zur anoxischen als auch zur aeroben Behandlung im mit dem zu behandelnden Trinkwasser gefüllten Behälter eine ständige Rotationsbewegung aus, durch die überschüssige Biomasse bzw. als Redaktionsmittel dienende Nährstoffe kontinuierlich aus den in den Tauchtrommelreaktoren angeordneten Tauchkörpern ausgespült werden. Auf den Tauchkörperflächen bleibt dadurch lediglich eine dünne, aber biologisch aktive Bakterienschicht zurück. Diese erlaubt beim erfindungsgemäßen Denitrifikationsverfahren einen praktisch ununterbrochenen Betrieb. Verstopfungen der Tauchkörper werden durch die ständige Bewegung derselben im zu behandelnden Trinkwasser vermieden. Außerdem entfällt das beim Stand der Technik erforderliche Rückspülen beim erfindungsgemäßen Verfahren.

Außerdem findet infolge der Rotationsbewegungen der Tauchtropfkörper ein kontrollierter Durchfluß des zu behandelnden Wassers durch die Behälter der einzelnen Behandlungsstufen statt zur Erzielung einer optimalen Nährstoffaufnahme und eines optimalen Gasaustauschs.

Durch die auf die anoxische Biostufe folgende aerobe Biostufe werden überschüssige zugesetzte Nährtoffe abgebaut. Im Anschluß an die aerobe Behandlung wird die restliche Biomasse durch einfache mechanische Filter abgebaut werden, d. h. es kann auf im Prozeß schwierig zu kontrollierende, biologische Filter verzichtet werden.

Eine Vorrichtung zur Lösung der Aufgabe weist die kennzeichnenden Merkmale des Anspruchs 3 auf. Demnach setzt sich der biologisch arbeitende Teil der Vorrichtung aus prinzipiell gleich aufgebauten Tauchtrommelreaktoren zusammen, die rationell in Serie gefertigt werden können, leicht montierbar und demontierbar sind und darüber hinaus im Betrieb einfach kontrolliert werden können.

Durch die Lagerung der Tauchtrommelreaktoren auf einer gemeinsamen Antriebswelle entsteht eine kompakte Vorrichtung, die nur einen Antrieb erfordert. Je nach Leistungsfähigkeit der Anlage können in einem Behälter, d. h. in einer Behandlungsstufe, ein oder auch mehrere Tauchtrommelreaktoren hintereinander angeordnet sein.

Außerdem können durch die Anordnung der Tauchtrommelreaktoren auf einer gemeinsamen Antriebswelle die Behälter einfach aufgebaut sein. Diese liegen unmittelbar nebeneinander und sind lediglich durch eine Trennwand unterteilt. Die Behälter sind dadurch zusammengefaßt zu einem einzigen Grundbehälter, wodurch sich die erfindungsgemäße Vorrichtung durch eine äußerst kompakte Bauweise auszeichnet.

Die Tauchtrommelreaktoren setzen sich erfindungsgemäß aus einem dreidimensionalen Tragwerk und dem darin angeordneten Tauchkörper zusammen. In vorteilhafter Ausgestaltung der Erfindung bestehen die Tauchkörper wiederum aus einer Mehrzahl von Tauchkörpersegmenten. Auf diese Weise lassen sich die Tauchtrommelreaktoren aus kleineren (handhabbaren) Komponenten zusammensetzen. Bei eventuell auftretenden Störungen im Tauchtrommelreaktor können einzelne Segmente ausgewechselt werden.

Das Tragwerk setzt sich aus radial zu den Längsmittelachsen der Trauchtrommelreaktoren verlaufenden Profilstäben zusammen, die derart angeordnet sind, daß sie die einzelnen Tauchkörpersegmente in ihren radialgerichteten Kanten führen. Zur Sicherung der einzelnen Tauchkörpersegmente gegen Herausfallen aus den Trommelreaktoren dienen den äußeren Umfang derselben umgebende Spannringe, die entweder als Ganzes oder ebenfalls als Segmente ausgebildet mit den freien Enden der Profilstäbe des Tragwerks verbunden sind.

In der ersten, unter Sauerstoffabschluß arbeitenden, anoxischen Biostufe ist der Behälter zur Aufnahme des Tauchtrommelreaktors vorzugsweise gasdicht ausgebildet. Der Tauchtrommelreaktor kann in dieser Stufe etwa zur Hälfte in das zu behandelnde Wasser eingetaucht werden. Hierdurch können die am Tauchkörper aufwachsenden Bakterien nach einer kurzen Anlaufphase zur Nitratatmung übergehen, d. h. das Nitrat-Ion durch Verwendung der am Ion gebundenen drei Sauerstoffatome zu gasförmigem Stickstoff reduzieren. Durch den Luftabschluß des Behälters wirkt sich das kurzzeitige Austauchen eines Teiles des Tauchtrommelreaktors aus dem Wasser auf die Aktivität des Bakterienrasens nicht negativ aus. Alternativ kann die Denitrifikation in der ersten, anaeroben Biostufe auch in einem offenen Behälter erfolgen, allerdings mit einem vollständig in das zu behandelnde Wasser eingetauchten Tauchtrommelreaktor. Durch das ständige Eingetauchtsein der Tauchkörpersegmente in dem zu behandelnden Wasser erfolgt hier ein zur Nitratreduzierung notwendiger, ständiger Abschluß des biologischen Rasens gegenüber der Sauerstoffzufuhr.

In der zweiten, aeroben Biostufe findet die Behandlung in einem offenen Behälter unter Sauerstoffzufuhr statt. Der Tauchtrommelreaktor ist in dieser Behandlungsstufe etwa zur Hälfte in das denitrifizierte Wasser eingetaucht. Dabei wird das Wasser infolge der Rotation des Tauchtrommelreaktors ständig belüftet zur Bildung eines aeroben Bakterienrasens auf dem Tauchkörper dieser Behandlungsstufe. Die aeroben Bakterien verzehren dabei den Rest der im Überschuß in der ersten Behandlungsstufe dosierten Reduktionsmittel und einen Teil der bei der Denitrifikation aus dem ersten Tauchtrommelreaktor ausgetragenen Biomasse.

Die Behälter der beiden Behandlungsstufen sind erfindungsgemäß durch einen Überlauf miteinander verbunden. Dieser ist derart angeordnet, daß sich im Behälter der ersten Behandlungsstufe ein gegenüber der zweiten Behandlungsstufe höherer Wasserpegel zwangsläufig einstellt zur Gewährleistung der erforderlichen Tauchtiefen der unterschiedliche Behandlungen vornehmenden Tauchtrommelreaktoren. Dadurch kann auf aufwendige Regelungen zur Einstellung der erforderlichen pegelhöhen in den einzelnen Behandlungsbehältern verzichtet werden.

Schließlich schlägt die Erfindung vor, den Überlauf, einen Wasserzulauf, in den ersten Behandlungsbehälter und einen Wasserablauf aus dem zweiten Behandlungsbehälter in die Nähe der Behälterecken zu setzen, und zwar zickzackförmig, so daß sich in jedem Behälter der Wasserzu- und -ablauf etwa diagonal gegenüberliegen. Dadurch wird in den einzelnen Behältern beim Wasserdurchlauf eine. Ausbildung von toten Zonen sowie von Kurzschlußströmen vermieden. Der biologische Rasen auf den Tauchkörpern wird dadurch intensiv umströmt. Gleichzeitig wird eine Ausbildung von toten Zonen mit nichtströmendem Wasser in den Behältern vermieden zur gleichermaßen intensiven Behandlung des Trinkwassers.

Weitere Merkmale der Erfindung betreffen die konstruktive Ausbildung des Tragwerks und der Tauchkörpersegmente der Trommelreaktoren.

Ein Ausführungsbeispiel der Erfindung wird nachfolgend anhand der Zeichnungen näher erläutert. Es zeigen:

Fig. 1 eine schematische Seitenansicht einer Vorrichtung,

Fig. 2 einen schematischen Grundriß der Vorrichtung gemäß der Fig. 1,

Fig. 3 eine perspektivische Gesamtansicht eines Tauchtrommelreaktors,

Fig. 4 einen teilweise vergrößert dargestellten Querschnitt durch den Tauchtrommelreaktor gemäß der Fig. 3,

Fig. 5 eine teilweise Seitenansicht des Tauchtrommelreaktors gemäß der Fig, 4,

Fig. 6 eine perspektivische Darstellung eines Tauchkörpersegments,

Fig. 7 eine Seitenansicht eines Abschnitts eines Netzrohres, und

Fig. 8 einen Querschnitt VII-VII durch das Netzrohr gemäß der Fig. 7.

Das vorliegende Ausführungsbeispiel betrifft eine Kompakt-Vorrichtung zur biologischen Denitrifikation von Trinkwasser.

Die Vorrichtung besteht aus einer (ersten) anoxischen Biostufe 10 mit einem Behälter 11, in dem zwei nebeneinanderliegende Tauchtrommelreaktoren 12 angeordnet sind, einer(zweiten) aeroben Biostufe 13 mit einem einen Tauchtrommelreaktor 14 aufweisenden Behälter 15, und einer mechanischen Filteranlage 16 an sich bekannter Bauart.

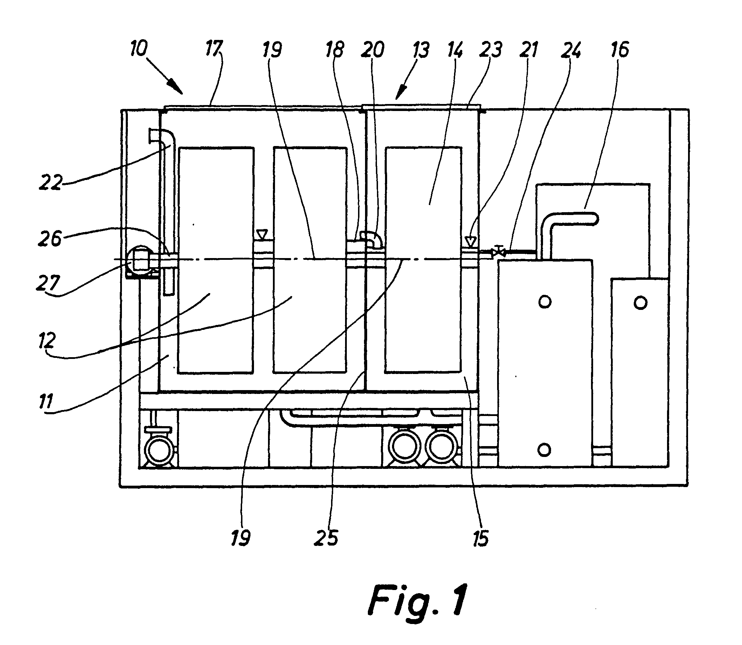

Der Behälter 11 der ersten Biostufe 10 ist gasdicht verschlossen ausgebildet durch einen die obere Öffnung des Behälters 11 verschließenden Deckel 17 (Fig. 1). Im Querschnitt (nicht gezeigt) ist der Behälter 11 in seiner unteren Hälfte annähernd der Rundung der Tauchtrommelreaktoren 12 angepaßt, d. h. in der unteren Hälfte verläuft die Wandung des Behälters 11 mit Abstand etwa parallel zu den Tauchtrommelreaktoren 12.

Der Wasserpegel 18 im Behälter 11 der ersten Biostufe 10 liegt im vorliegenden Ausführungsbeispiel oberhalb der horizontalen Längsmittelachsen 19 der Tauchtrommelreaktoren 12, und zwar um etwa 20 % des Durchmessers derselben. Ein die Behälter 11 und 15 verbindender Überlaufrohrkrümmer 20 dient zur Aufrechterhaltung des vorgesehenen Wasserpegels IB im Behälter 11. Zu diesem Zweck ist ein im Behälter 11 mündender, horizontaler Abschnitt des Überlaufrohrkrümmers 20 in der Höhe oberhalb des Wasserpegels 18 angeordnet. Ein im Behälter 15 mündender, vertikaler Rohrabschnitt des Überlaufrohrkrümmers 20 mündet unterhalb des Wasserpegels 21 im Behälter 15 der zweiten Biostufe 13.

Durch einen Zulaufrohrkrümmer 22 gelangt das zu behandelnde Wasser, nämlich das mit als Reduktionsmittel dienende Nährstoffe versehene Grundwasser, in den Behälter 11 der ersten Biostufe I0. Der Zulaufrohrkrümmer 22 tritt bei diesem Ausführungsbeispiel mit seinem horizontalen Rohrabschnitt in einen oberen Bereich des Behälters 11 ein und ragt mit seinem (langen) vertikalen Rohrabschnitt tief in das in der ersten Biostufe 10 zu denitrifizierende Wasser hinein. Im vorliegenden Ausführungsbeispiel tritt der Zulaufrohrkrümmer 22 etwa um ein Drittel der Höhe des Wasserpegels 18 von oben her in das Wasser ein. Der Überlaufrohrkrümmer 20 und der Zulaufrohrkrümmer 22 sind etwa diagonal gegenüberliegenden Eckbereichen des Behälters 11 der ersten (anoxischen) Biostufe 10 zugeordnet.

Der hier nur einen Tauchtrommelreaktor 14 aufweisende Behälter 15 der zweiten (aeroben) Biostufe 13 ist an seiner Oberseite 23 unverschlossen. Damit ist in diesem Behälter 15 im Gegensatz zum Behälter 11 eine Belüftung des zu behandelnden Wassers möglich. Der Wasserpegel 21 im Behälter 15 liegt geringfügig oberhalb der Längsmittelachse 19 des Trommelreaktors 14. Damit liegt der Wasserpegel 21 der zweiten Biostufe 13 unterhalb des Wasserpegels 18 der ersten Biostufe I0. Gehalten wird der vorgesehene Wasserpegel 21 im Behälter 15 - wie im Behälter 11 - durch ein in entsprechender Höhe angeordnetes Abflußrohr 24. Durch dieses gelangt das denitrifizierte Trinkwasser in die mechanische Filteranlage 16. Als solche können hier handelsübliche, mechanische Filteranlagen verwendet werden, soweit sie einem kontinuierlichen Betrieb der Biostufen 10 und 13 nicht entgegenstehen.

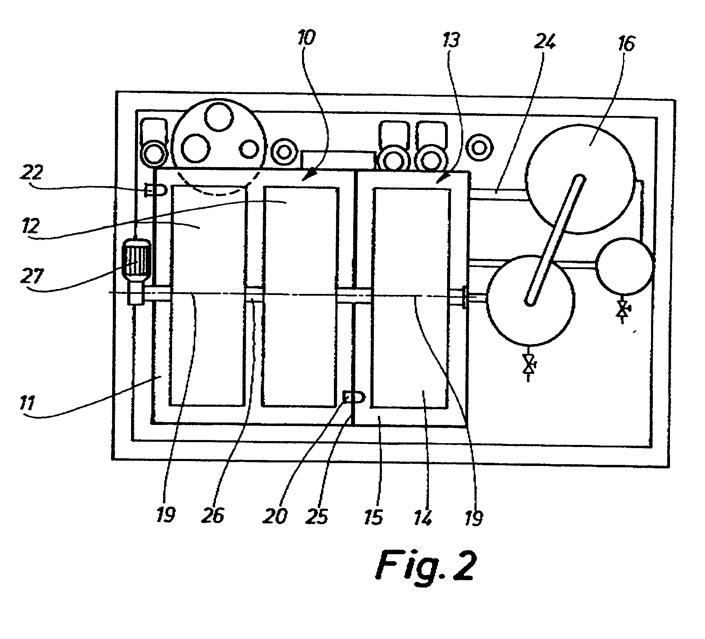

Die Behälter 11 und 15 weisen im vorliegenden Ausführungsbeispiel gleiche - etwa trogförmige - Querschnitte auf. Die Behälter 11 und 15 liegen unmittelbar hintereinander sie sind getrennt durch eine gemeinsame, mittlere Trennwand 25. Das Abflußrohr 24 ist wiederum in einem dem Überlaufrohrkrümmer 20 diagonal gegenüberliegenden Eckbereich des Behälters 15 angeordnet. Der Zulaufrohrkrümmer 22 zum Behälter 11 und das Abflußrohr 24 im Behälter 15 liegen sich dadurch etwa gegenüber (Fig. 2). In der Höhe sind das Abflußrohr 24 und der Überlaufrohrkrümmer 20 entsprechend dem unter schiedlich hohen Wasserpegel 18 bzw. 21 in den Behältern 11 und 15 versetzt, indem nämlich das Abflußrohr 24 tiefer angeordnet ist.

Die Lagerung der beiden Tauchtrommelreaktoren 12 im Behälter 11 und des Tauchtrommelreaktors 14 im Behälter 15 erfolgt auf einer gemeinsamen, durchgehenden Antriebswelle 26 (Fig. 1 und 2). Letztere verläuft durch die Längsmittelachsen 19 der Tauchtrommelreaktoren 12 und 14, so daß diese in einer gemeinsamen Ebene hintereinanderliegen.

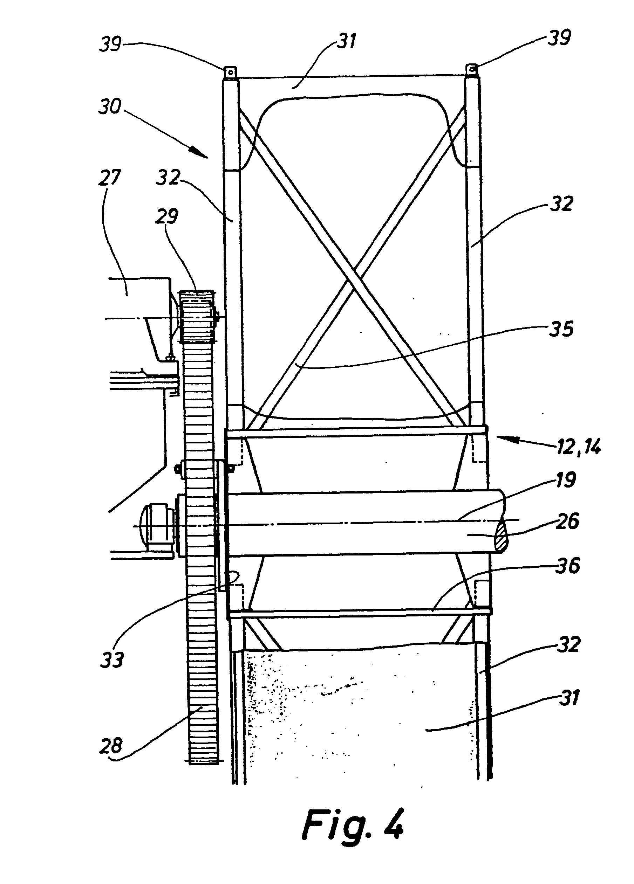

Der Antrieb sämtlicher Tauchtrommelreaktoren 12, 14 erfolgt durch einen gemeinsamen Elektromotor 27, der außerhalb der Behälter 11 und 15 angeordnet ist (Fig. 1, 2, 4). Zur Untersetzung der Motordrehzahl auf eine relativ geringe Antriebsdrehzahl der Trommelreaktoren 12, 14 kann zwischen der Antriebswelle 26 und dem Antriebsmotor 27 ein Getriebe 28 (Fig. 1, 2) oder alternativ ein offener Zahnradtrieb aus einem dem vorderen Tauchtrommelreaktor 12 im Behälter 11 zugeordneten, relativ großen Zahnrad 28 und einem kleinen Ritzel 29 am Antriebsmotor 27 (Fig. 4) zugeordnet sein.

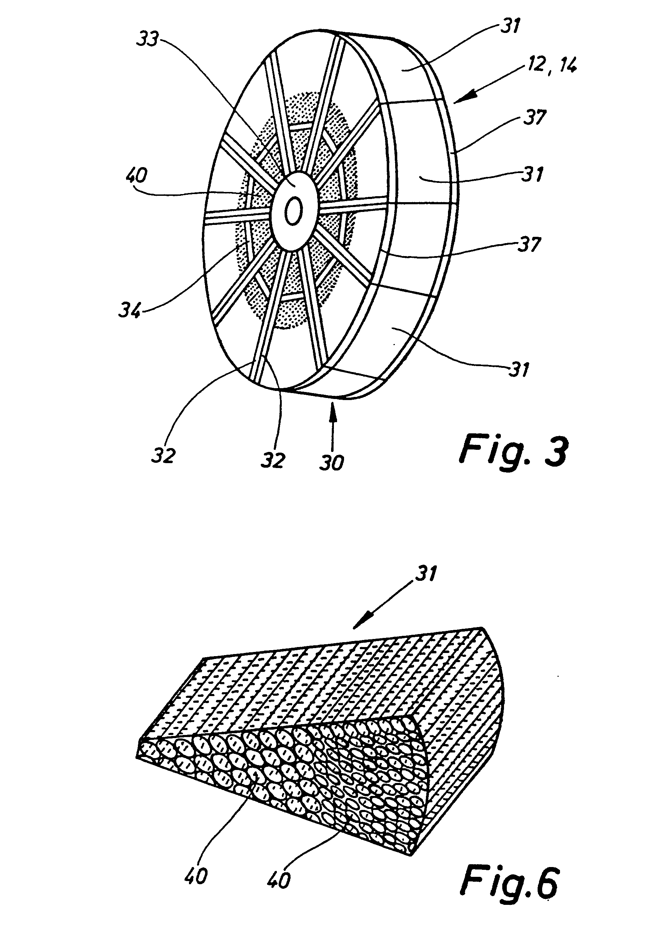

Die drei Tauchtrommelreaktoren 12, 14 sind im vorliegenden Ausführungsbeispiel gleich ausgebildet. Es besteht jeder Tauchtrommelreaktor 12, 14 aus einem dreidimensionalen, zylindrischen Tragwerk 30, das den im vorliegenden Ausführungsbeispiel aus insgesamt zehn Tauchkörpersegmenten 31 bestehenden Tauchkörper aufnimmt (Fig. 3).

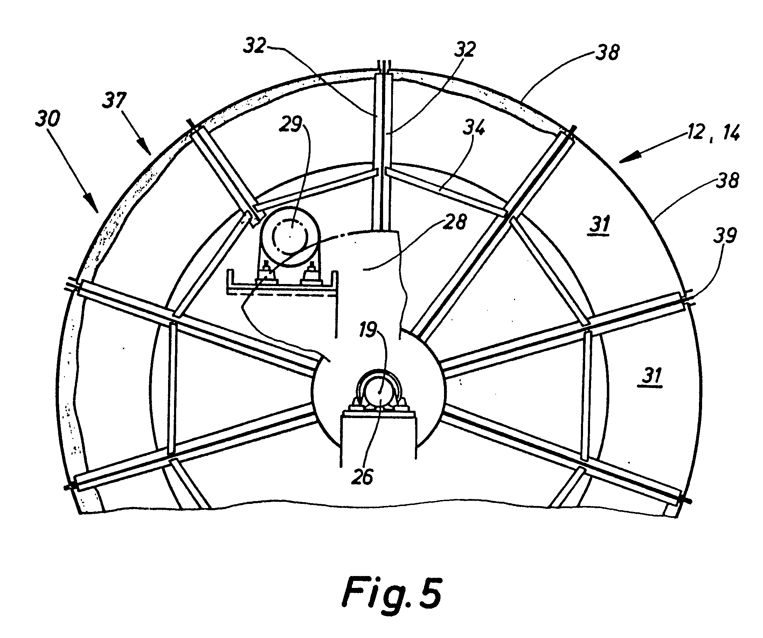

Das Tragwerk 30 besteht aus radialgerichteten, T-förmigen Profilstäben 32, die in zwei mit Abstand voneinander liegenden, aufrechten (Stirn-)Ebenen der Tauchtrommelreaktoren 12, 14 liegen. Die zum Mittelpunkt der Tauchtrommelreaktoren 12, 14 gerichteten Enden der Profilstäbe 32 sind mit der Antriebswelle 26 durch daran angeordnete Kragen 33 verbunden (Fig. 4). An den Stirnseiten der Tauchtrommelreaktoren 12, 14 sind die Profilstäbe 32 untereinander durch quergerichtete Streben 34 versteift (Fig. 5). In der quer dazu radialgerichteten Ebene zwischen zwei Tauchkörpersegmenten 31 sind die paarweise nebeneinanderliegenden Profilstäbe 32 ebenfalls verstrebt, und zwar durch eine X-förmig zu den Enden der Profilstäbe 32 verlaufende Versteifung 35 (Fig. 4).

Die Abmessungen des Tragwerks 30 und die Anordnung der Profilstäbe 32 sind derart getroffen, daß die in diesem Ausführungsbeispiel vorgesehenen insgesamt zehn Tauchkörpersegmente 31 radial von außen in das Tragwerk 30 einschiebbar sind. Dabei werden die Tauchkörpersegmente 31 in den Eckbereichen der radialgerichteten Längskanten durch das T-förmige Profil der profilstäbe 32 geführt.

Im Bereich der Nabe des Tragwerks 30 sind mit Abstand parallel zur Antriebswelle 26 verlaufende Querstäbe 36 angeordnet. Diese begrenzen die Einschubtiefe der Tauchkörpersegmente 31 in das Tragwerk 30.

Am äußeren Umfang weist das Tragwerk 30 zwei Spannringe 37 auf, die jeweils einer durch die Profilstäbe 32 gebildeten (Stirn-)Ebene zugeordnet sind. Im vorliegenden Ausführungsbeispiel setzen sich die Spannringe 37 aus jeweils zehn Ringabschnitten 38 zusammen. Diese verbinden jeweils die äußeren, freien Enden zweier in einer Ebene liegender Profilstäbe 32. Zu diesem Zweck weist jeder profilstab 32 an seinem freien, äußeren Ende eine Lasche 39 auf, mit der zwei gegenüberliegende Ringabschnitte 38 verschraubt sind. Die Anordnung der Ringabschnitte 38 des Tragwerks 30 ist derart getroffen, daß diese die Randbereiche der äußeren, gewölbten Fläche der Tauchkörpersegmente 31 von der Außenseite der Tauchtrommelreaktoren 12, 14 her überdecken zur Sicherung der Tauchkörpersegmente 31 in den Tauchtrommelreaktoren 12, 14.

Jedes Tauchkörpersegment 31 besteht aus einer Vielzahl von achsparallel zur Längsmittelachse 19 der Tauchtrommelreaktoren 12, 14 verlaufenden Netzrohren 40 (Fig. 3, Fig. 6). Die einzelnen zu einem Tauchkörpersegment 31 zusammengepackten Netzrohre 40 sind untereinander verbunden durch Verschweißen ihres gegenüberliegenden Stirnseiten.

Die Durchmesser der einzelnen Netzrohre 40 eines Tauchkörpersegments 31 können unterschiedlich sein. Beispielsweise können zum Inneren des Tauchtrommelreaktors 12, 14 hin Netzrohre 40 größeren Durchmessers angeordnet sein, während außen Netzrohre 40 kleineren Durchmessers Verwendung finden (Fig, 6). Ebenso ist es alternativ denkbar, im Inneren des Tauchtrommelreaktors 12, 14 kleinere Netzrohre 40 anzuordnen als außen. Dadurch entsteht in allen Bereichen des Tauchtrommelreaktors 12, 14 eine etwa gleich große geometrische Oberfläche.

Die Durchmesser der Netzrohre 40 können 10 mm - 70 mm betragen. Dabei kann eine geometrische Oberfläche zwischen 100 m²/m³ und 400 m²/m³ entstehen.

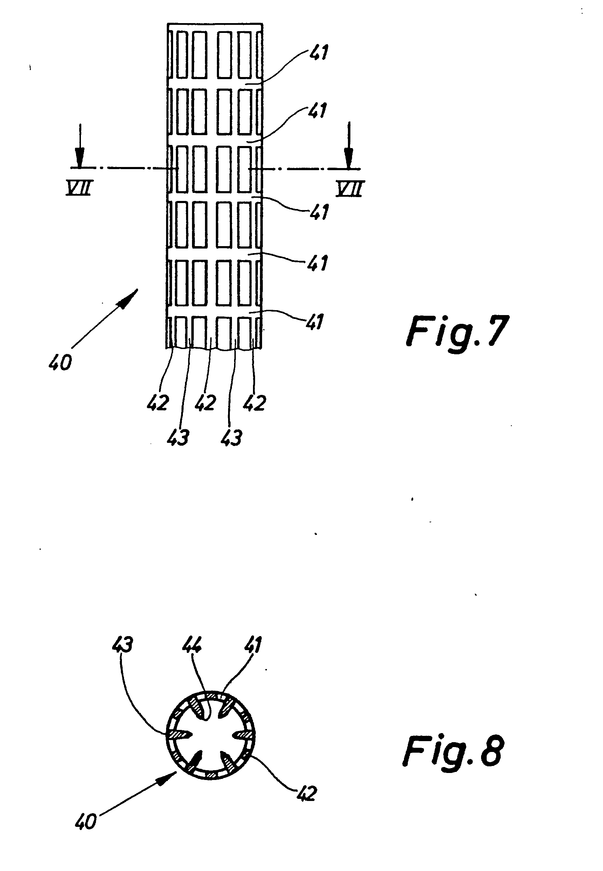

Die Netzrohre 4D bestehen aus sich mit Kreisfäden 41 kreuzenden Längsfäden 42 etwa gleicher Querschnittsabmessungen (Fig. 7). Zusätzlich weisen die Netzrohre 40 zwischen jedem Längsfaden 42 einen Längssteg 43 auf. Letzterer verfügt über einen spitzen, dreieckförmigen Querschnitt und ragt mit radial nach innen gerichteten Spitzen 44 in das Netzrohr 40 hinein (Fig. 8).

Die Vorrichtung des beschriebenen Ausführungsbeispiels arbeitet folgendermaßen:

Das zu behandelnde Grundwasser wird unter Zufuhr von als Reduktionsmittel dienenden Nährstoffe über den Zulaufrohrkrümmer 22 in den Beu on hälter 11 der ersten (anoxischen) Biostufe 10 eingeleitet. Hierin reduzieren die sich auf den Netzrohren 40 bildenden Bakterien das im Grundwasser enthaltene Nitrat zu gasförmigem Stickstoff. Das so denitrifizierte Trinkwasser gelangt dann durch den Überlaufrohrkrümmer 20 in den Behälter 15 der zweiten, aeroben Biostufe 13. Hier werden im belüfteten Wasser die überschüssigen Reduktionsmittel und die aus der ersten Biostufe 10 ausgespülten Bakterien biologisch abgebaut. Schließlich gelangt das derart behandelte Wasser über das Abflußrohr 24 aus der zweiten Biostufe 13 in die mechanische Filteranlage 16. Diese filtert rein mechanisch die überschüssige Biomasse aus dem Trinkwasser heraus. Eine biologische Nachbereitung ist in der mechanischen Filteranlage 16 nicht mehr erforderlich.

Durch den gemeinsamen Antrieb der Tauchtrommelreaktoren 12, 14 von der Antriebswelle 26 aus werden in beiden Biostufen 10, 13 die Tauchtrommelreaktoren 12, 14 kontinuierlich mit gleicher Geschwindigkeit bewegt zur gleichmäßigen Durchspülung der Tauchkörpersegmente 31.

**Patentansprüche**

1. Verfahren zur Trinkwasseraufbereitung durch Denitrifikation von Rohwasser, insbesondere Grundwasser, wobei mittels einer anoxischen Behandlung durch mit zugesetzten Nährstoffen versorgten Mikroorganismen das im Rohwasser enthaltene Nitrat unter Bildung von entweichendem Stickstoff reduziert wird, und anschließend überschüssige Nährstoffe aerob beseitigt werden, dadurch gekennzeichnet, daß sowohl die anoxische als auch die aerobe Behandlung kontinuierlich in jeweils wenigstens einem rotierenden Tauchtrommelreaktor (12, 14) durchgeführt werden zum kontinuierlichen Ausspülen von in den Tauchtrommelreaktoren (12, 14) gebildeter Biomasse bei Verbleib einer dünnen, aktiven Bakterienschicht auf den Flächen der Tauchtrommelreaktoren (12, 14), und die aus den Tauchtrommelreaktoren (12, 14) ausgespülte Biomasse anschließend mechanisch ausgefiltert wird.

2. Verfahren nach Anspruch 1 oder 2, dadurch gekennzeichnet, daß die Tauchtrommelreaktoren (12, 14) nacheinander kontinuierlich etwa senkrecht zu ihrer Bewegungsrichtung von dem zu behandelnden Rohwasser durchströmt werden.

3. Vorrichtung zur Trinkwasseraufbereitung durch Denitrifikation von Rohwasser, insbesondere Grundwasser, mit einer vom aufzubereitenden Rohwasser durchströmten anoxischen Biostufe (10) und einer aeroben Biostufe (13), gekennzeichnet durch eine Ausbildung der (ersten) anoxischen Biostufe (10) als unter sauerstoffdusschluß in einem Behälter (11) angeordnete Tauchtrommelreaktoren (12) und einer zweiten (aeroben) Biostufe (13) aus wenigstens einem unter sauerstoffzufuhr in einem Behälter (15) angeordneten Tauchtrommelreaktor (14), wobei die Tauchtrommelreaktoren (12, 14) auf einer gemeinsamen Antriebswelle (26) drehbar hintereinanderliegend in den durch eine (mittige) Trennwand (25) unterteilten Behältern (11, 15) angeordnet sind und an die aerobe Biostufe (13) eine mechanische Filterstufe anschließt.

4. Vorrichtung nach Anspruch 3, dadurch gekennzeichnet, daß die Tauchtrommelreaktoren (12, 14) gleichermaßen aus einem dreidimensionalen, zylindrischen Tragwerk (30), das mit der Antriebswelle (26) verbunden ist, und im Tragwerk (30) angeordneten Tauchkörpern (Tauchkörpersegmente 31) gebildet sind.

5. Vorrichtung nach Anspruch 4, dadurch gekennzeichnet, daß die Tauchkörper aus einer Mehrzahl, vorzugsweise etwa zehn, etwa gleich großer Tauchkörpersegmente (31) gebildet sind.

6. Vorrichtung nach Anspruch 5, dadurch gekennzeichnet, daß die Tauchkörpersegmente (31) aus einer Vielzahl achsparallel zur Längsmittelachse (19) verlaufender Netzrohre (40) zusammengesetzt sind.

7. Vorrichtung nach Anspruch 5 oder 6 dadurch gekennzeichnet, daß die Tauchkörpersegmente (31) aus Netzrohren (40) unterschiedlichen Durchmessers, insbesondere mit nach außen abnehmendem Durchmesser, zusammengesetzt sind.

8. Vorrichtung nach Anspruch 6 oder 7 dadurch gekennzeichnet, daß die Netzrohre (40) der Tauchkörpersegmente (31) untereinander verbunden sind, vorzugsweise durch Verschweißen ihrer gegenüberliegenden, freien Stirnflächen.

9. Vorrichtung nach Anspruch 4 sowie einem oder mehreren der weiteren Ansprüche, dadurch gekennzeichnet, daß die Tragwerke (30) der Tauchtrommelreaktoren (12, 14) aus in zwei mit Abstand voneinander liegenden (Stirn-) Ebenen strahlenförmig angeordneten Profilstäben (32), die mit je einem Kragen (33) an der Antriebswelle (26) befestigt sind, und zwei die freien Enden der Profilstäbe (32) jeder Ebene verbindenden Spannringen (37) bestehen.

10. Vorrichtung nach Anspruch 9, dadurch gekennzeichnet, daß die Profilstäbe (32) einen T-förmigen Querschnitt aufweisen und derart angeordnet sind, daß sie alle in Radialrichtung des Tauchtrommelreaktors (12, 14) verlaufenden Längskanten der Tauchkörpersegmente (31) umgreifen zur Führung derselben in den Tragwerken (30) der Trommelreaktoren (12 14).

11. Vorrichtung nach Anspruch 9 oder 10 dadurch gekennzeichnet, daß die Spannringe (37) derart mit den freien Enden der Profilstäbe (32) verbunden sind, daß sie die stirnseitig gegenüberliegenden, gewölbten Ränder der Tauchkörpersegmente (31) überdecken zur Sicherung derselben in den Tragwerken (30) der Tauch trommelreaktoren (12, 14) gegen Herausfallen.

12. Vorichtung nach einem oder mehsesen der Ansprüche 9 bis 11, dadurch gekennzeichnet, daß die Spannringe (37) geteilt ausgebildet sind als den Umfang der Tauchtrommelreaktoren (12, 14) zwischen jeweils den äußeren Enden zweier Profilstäbe (32) umschreibende Ringabschnitte, die jedem Tauchkörpersegment (31) zugeordnet sind, sowie untereinander und/oder mit den freien Enden der ihnen zugeordneten Profilstäbe (32) verschraubt sind.

13. Vorrichtung nach Anspruch 3 sowie einem oder mehreren der weiteren Ansprüche, dadurch gekennzeichnet, daß in der ersten (anoxischen) Biostufe (10) der Behälter (11) gasdicht ausgebildet ist und der bzw. die Tauchtrommelreaktor(en) darin bis über die Hälfte, insbesondere bis etwa zwei Drittel, in das zu behandelnde (Trink-)Wasser eingetaucht sind.

14. Vorrichtung nach Anspruch 3 sowie einem oder mehreren der weiteren Ansprüche, dadurch gekennzeichnet, daß in der ersten (anoxischen) Biostufe (10) der bzw. die Tauchtrommelreaktor(en) (12) vollständig in das zu behandelnde (Trink-)Wasser eingetaucht sind zur Isolierung des Tauchtrommelreaktors gegen Sauerstoff.

15. Vorrichtung nach Anspruch 6 sowie einem oder mehreren der weiteren Ansprüche, dadurch gekennzeichnet, daß in der zweiten, aeroben Biostufe (13) der Tauchtrommel reaktor (14) in einem eine Luftzufuhr ermöglichenden (offenen) Behälter (15) in etwa zur Hälfte in das zu behandelnde (Trink-)Wasser eingetaucht angeordnet ist.

16. Vorrichtung nach Anspruch 3 sowie einem oder mehreren der weiteren Ansprüche, dadurch gekennzeichnet, daß die beiden hintereinanderliegenden Behälter (11, 15) durch wenigstens eine Verbindungsleitung, insbesondere einen Überlaufrohrkrümmer (20), verbunden sind, der bezüglich seiner Höhe derart im ersten Behälter (11) angeordnet ist, daß sich in demselben ein gewünschter Wasserpegel (18) des zu behandelnden (Trink-)Wassers einstellt.

17. Vorrichtung nach Anspruch 3 sowie einem oder mehreren der weiteren Ansprüche, dadurch gekennzeichnet, daß ein Zulauf, insbesondere ein Zulaufrohrkrümmer (22), zur Zufuhr des zu behandelnden (Trink-)Wassers in den (ersten) Behälter (11) in einem dem Überlaufrohrkrümmer (20) etwa diagonal gegenüberliegenden Eckbereich angeordnet ist und unterhalb des Wasserpegels (18) im (ersten) Behälter (11) mündet.

18. Vorrichtung nach Anspruch sowie 3 einem oder mehreren der weiteren Ansprüche, dadurch gekennzeichnet, daß ein Abflußrohr (24) des (Trink-)Wassers aus dem (zweiten) Behälter (15) in der dem Überlaufrohrkrümmer (20) gegenüberliegenden Seite derart in der Höhe angeordnet ist, daß sich der gewünschte Wasserpegel (21) (etwa auf halber Höhe des Trommelreaktors) einstellt.

19. Vorrichtung nach den Ansprüchen 16 bis 18, dadurch gekennzeichnet, daß der Zulaufrohrkrümmer (22), der Überlaufrohrkrümmer (20) und das Abflußrohr (24) bezüglich des Grundrisses der Behälter (II, 15) zickzackförmig auf diagonal gegenüberliegenden Eckbereichen der Behälter verteilt angeordnet sind.

**Revendications**

1. Procédé de préparation d'eau potable par dénitrification d'eau brute, en particulier d'eaux souterraines, dans lequel, au moyen d'un traitement en anaérobiose par des micro-organismes alimentés en substances nutritives ajoutées, le nitrate contenu dans l'eau brute est réduit avec formation d'un dégagement d'azote et dans lequel ensuite des substances nutritives excédentaires sont éliminées en aérobiose, caractérisé en ce que non seulement le traitement en anaérobiose mais aussi celui en aérobiose sont effectués de manière continue chacun dans au moins un réacteur à cylindre plongeur rotatif (12, 14), en vue d'évacuer de manière continue une biomasse formée dans les réacteurs à cylindre plongeur (12, 14) alors qu'il subsiste une mince couche de bactéries active sur les surfaces des réacteurs à cylindre plongeur (12, 14) et en ce que la biomasse évacuée des réacteurs à cylindre plongeur (12, 14) est ensuite filtrée par voie mécanique.

2. Procédé suivant la revendication 1, caractérisé en ce que les réacteurs à cylindre plongeur (12, 14) sont traversés l'un après l'autre en continu par l'eau brute à traiter approximativement perpendiculairement à leur sens de déplacement.

3. Dispositif de préparation d'eau potable par dénitrification d'eau brute, en particulier d'eaux souterraines, comprenant un étage biologique (10) en anaérobiose qui est traversé par l'eau brut à traiter, et un étage biologique en aérobiose (13) caractérisé par une réalisation de l'étage biologique en anaérobiose (premier étage) (10) sous la forme de réacteurs à cylindre plongeur (12) agencés dans un réservoir (11) à l'abri de l'oxygène et par un deuxième étage biologique (en aérobiose) (13) constitué d'au moins un réacteur à cylindre plongeur (14) qui est agencé dans un réservoir (15) avec apport d'oxygène, les réacteurs à cylindre plongeur (12, 14) étant agencés l'un derrière l'autre sur un arbre d'entraînement commun (26) de manière à pouvoir tourner dans les réservoirs (11, 15) subdivisés par une cloison (25) (centrale), un étage de filtrage mécanique faisant suite à l'étage biologique en aérobiose (13).

4. Dispositif suivant la revendication 3, caractérisé en ce que les réacteurs à cylindre plongeur (12, 14) sont formés de manière uniforme d'une ossature porteuse (30) cylindrique, tridimensionnelle, qui est reliée à l'arbre d'entraînement (26), et de corp plongeurs (segments de corps plongeur 31) agencés dans l'ossature porteuse (30).

5. Dispositif suivant la revendication 4, caractérisé en ce que les corps plongeurs sont formés de plusieurs, de préférence d'environ dix, segments de corps plongeur (31) ayant une grandeur approximativement identique.

6. Dispositif suivant la revendication 5, caractérisé en ce que les segments de corps plongeur (31) sont composés d'un grand nombre de tubes en treillis (40) qui sont disposés parallèlement à l'axe médian longitudinal (19).

7. Dispositif suivant l'une des revendications 5 et 6, caractérisé en ce que les segments de corps plongeur (31) sont composés de tubes en treillis (40) de diamètres différents, en particulier avec un diamètre qui décroît vers l'extérieur.

8. Dispositif suivant l'une des revendications 6 et 7, caractérisé en ce que les tubes en treillis (40) des segments de corps plongeur (31) sont reliés entre eux, de préférence par soudage de leurs faces frontales libres, opposées.

9. Dispositif suivant la revendication 4 ainsi que suivant une ou plusieurs des autres revendications, caractérisé en ce que l'ossature porteuse (30) des réacteurs à cylindre plongeur (12, 14) est constituée de barres profilées (32) qui sont agencées en forme de rayons dans deux plans (frontaux) situés à distance l'un de l'autre et qui sont fixées chacune à un collet (33) prévu sur l'arbre d'entraînement (26), et de deux anneaux de serrage (37) qui relient les extrémités libres des barres profilées (32) de chaque plan.

10. Dispositif suivant la revendication 9, caractérisé en ce que les barres profilées (32) présentent une section transversale en forme de T et en ce qu'elles sont agencées de telle façon qu'elles entourent tous les bords longitudinaux des segments de corps plongeur (31) qui sont disposés dans le sens radial du réacteur à cylindre plongeur (12, 14), en vue de guider ceux-ci dans les ossatures porteuses (30) des réacteurs (12, 14).

11. Dispositif suivant l'une des revendications 9 et 10, caractérisé en ce que les anneaux de serrage (37) sont reliés aux extrémités libres des barres profilées (32) de façon qu'elles recouvrent les bords bombés, opposés du côté frontal, des segments de corps plongeur (31) pour assurer ceux-ci contre toute chute dans les ossatures porteuses (30) des réacteurs à cylindre plongeur (12, 14).

12. Dispositif suivant une ou plusieurs des revendications 9 à 11, caractérisé en ce que les anneaux de serrage (37) sont réalisés sous une forme divisée, comme sections annulaires qui circonscrivent le pourtour des réacteurs à cylindre plongeur (12, 14) entre chacune des extrémités extérieures de deux barres profilées (32) et qui sont adjointes à chaque segment de corps plongeur (31), et sont vissées entre elles et/ou avec les extrémités libres des barres profilées (32) qui leur sont adjointes.

13. Dispositif suivant la revendication 3 ainsi que suivant une ou plusieurs des autres revendications, caractérisé en ce que, dans le premier étage biologique (10) (en anaérobiose), le réservoir (11) est réalisé sous une forme étanche aux gaz et en ce que le ou les réacteurs a cylindre pongeur situés à l'intérieur sont plongés jusqu'au-delà de la moitié, en particulier jusqu'à environ deuxtiers, dans l'eau (potable) à traiter.

14. Dispositif suivant la revendication 3 ainsi que suivant une ou plusieurs des autres revendications, caractérisé en ce que, dans le premier étage biologique (10) (en anaérobiose), le ou les réacteurs à cylindre plongeur (12) sont complètement plongés dans l'eau (potable) à traiter, pour isoler le réacteur à cylindre plongeur vis-à-vis de l'oxygène.

15. Dispositif suivant la revendication 6 ainsi que suivant une ou plusieurs des autres revendications, caractérisé en ce que, dans le deuxième étage biologique (13) en aérobiose, le réacteur à cylindre plongeur (14) est agencé dans un réservoir (15) (ouvert) permettant un apport d'air, en étant plongé approximativement jusqu'à la moitié dans l'eau (potable) à traiter.

16. Dispositif suivant la revendication 3 ainsi que suivant une ou plusieurs des autres revendications, caractérisé en ce que les deux réservoirs situés l'un derrière l'autre (11, 15) sont reliés par au moins un conduit de communication, en particulier un tube coudé de trop-plein (20), qui, en ce qui concerne sa hauteur, est agencé dans le premier réservoir (11) de telle façon que, dans ce dernier, un niveau d'eau souhaité (18) de l'eau (potable) à traiter soit ajusté.

17. Dispositif suivant la revendication 3 ainsi que suivant une ou plusieurs des autres revendications, caractérisé en ce qu'une entrée, en particulier un tube coudé d'entrée (22), pour l'alimentation en eau (potable) à traiter dans le (premier) réservoir (11) est agencée dans une zone de coin approximativement diagonalement opposée au tube coudé de trop-plein (20) et en ce qu'elle débouche en dessous du niveau d'eau (18) du (premier) réservoir (11).

18. Dispositif suivant la revendication 3 ainsi que suivant une ou plusieurs des autres revendications, caractérisé en ce qu'un tube d'évacuation (24) de l'eau (potable) hors du (deuxième) réservoir (15) est agencé dans le côté opposé au tube coudé de trop plein (20) à une hauteur telle que le niveau d'eau souhaité (21) (environ à mi-hauteur du réacteur) s'ajuste.

19. Dispositif suivant l'une des revendications 16 à 18, caractérisé en ce que le tube coudé d'entrée (22), le tube coudé de trop-plein (20) et le tube d'évacuation (24) sont, dans une vue en plan des réservoirs (11, 15), disposés de manière répartie en zigzag sur des zones de coin diagonalement opposées des réservoirs.

**Claims**

1. Process for potable water treatment by denitrifying raw water, in particular groundwater, the nitrate present in the raw water being reduced by means of an anoxic treatment with microorganisms supplied with added nutrients, with the formation of nitrogen which escapes, and excess nutrients then being eliminated aerobically, characterized in that both the anoxic and the aerobic treatment are carried out continuously in at least one submerged rotary drum reactor (12, 14) in each case in order to wash out continuously biomass formed in the submerged drum reactors (12, 14) while a thin active bacteria layer remains on the surfaces of the submerged drum reactors (12, 14), and the biomass washed out of the submerged drum reactors (12, 14) is then filtered out mechanically.

2. Process according to Claim 1 or 2, characterized in that the raw water to be treated flows continuously and successively through the submerged drum reactors (12, 14), approximately perpendicular to the direction of movement of the latter.

3. Equipment for potable water treatment by denitrifying raw water, in particular groundwater, comprising an anoxic biological stage (10) through which raw water to be treated flows and an aerobic biological stage (13), characterized by the formation of the (first) anoxic biological stage (10) as submerged drum reactors (12) arranged in a vessel (11) with oxygen being excluded and of a second (aerobic) biological stage (13) from at least one submerged drum reactor (14) arranged in a vessel (15) with oxygen being supplied, the submerged drum reactors (12, 14) being rotatably arranged in series on a common drive shaft (26) in the vessels (II, 15) which are subdivided by a (central) partition (25) and the aerobic biological stage (13) being adjoined by a mechanical filtering stage.

4. Equipment according to Claim 3, characterized in that the submerged drum reactors (12, 14) are formed identically from a three-dimensional, cylindrical support structure (30), which is connected to the drive shaft (26), and immersion bodies (immersion body segments 31) arranged in the support structure (30).

5. Equipment according to Claim 4, characterized in that the immersion bodies are formed from a plurality of, preferably about ten, immersion body segments (31) of approximately equal size.

6. Equipment according to Claim 5, characterized in that the immersion body segments (31) are assembled from a multiplicity of open-mesh pipes (40) extending parallel to the longitudinal centre axis (19).

7. Equipment according to Claim 5 or 6, characterized in that the immersion body segments (31) are assembled from open-mesh pipes (40) of different diameters, in particular diameters which decrease outwards.

8. Equipment according to Claim 6 or 7, characterized in that the open-mesh pipes (40) of the immersion body segments (31) are mutually joined, preferably by welding of their opposite free end faces.

9. Equipment according to Claim 4 and/or one or more of the other claims, characterized in that the support structures (30) of the submerged drum reactors (12, 14) consist of profile bars (32), which are arranged radially in two mutually spaced (end) planes and which are each fixed to a collar (33) on the drive shaft (26), and of two clamping rings (37) which connect the free ends of the profile bars (32) in each plane.

10. Equipment according to Claim 9, characterized in that the profile bars (32) have a T-shaped cross-section and are arranged such that they surround all the longitudinal edges, running in the radial direction of the submerged drum reactor (12, 14), of the immersion body segments (31) for guiding the latter in the support structures (30) of the drum reactors (12, 14).

11. Equipment according to Claim 9 or 10, characterized in that the clamping rings (37) are joined to the free ends of the profile bars (32) in such a way that they cover the opposite curved edges of the end faces of the immersion body segments (31), in order to secure the latter in the support structures (30) of the submerged drum reactors (12, 14) against dropping out.

12. Equipment according to one or more of Claims 9 to 11, characterized in that the clamping rings (37) are of split design, as ring segments which circumscribe the periphery of the submerged drum reactors (12, 14) between the outer ends of two profile bars (32) in each case and which are allocated to each immersion body segment (31) and which are bolted to one another and/or to the free ends of the profile bars (32) associated with them.

13. Equipment according to Claim 3 and/or one or more of the other claims, characterized in that the vessel (11) in the first (anoxic) biological stage (10) is of gas-tight design and up to more than half, in particular up to about two thirds, of the submerged drum reactor or reactors is immersed therein into the (potable) water to be treated.

14. Equipment according to Claim 3 and/or one or more of the other claims, characterized in that the submerged drum reactor or reactors (12) in the first (anoxic) biological stage (10) is or are completely immersed into the (potable) water to be treated, in order to isolate the submerged drum reactor from oxygen.

15. Equipment according to Claim 6 and/or one or more of the other claims, characterized in that up to about half of the submerged drum reactor (14) in the second, aerobic biological stage (13) is arranged to be immersed in an (open) vessel (15), allowing a supply of air, into the (potable) water to be treated.

16. Equipment according to Claim 3 and/or one or more of the other claims, characterized in that the two series-arranged vessels (II, 15) are connected via at least one connecting line, in particular an over flow pipe elbow (20), which is arranged with respect to its height in such a way in the first vessel (11) that a desired water level (18) of the (potable) water to be treated is established therein.

17. Equipment according to Claim 3 and/or one or more of the other claims, characterized in that a feed, in particular a feed pipe elbow (22), for feeding the (potable) water to be treated into the (first) vessel (11) is arranged in a corner region approximately diagonally opposite the over flow pipe elbow (20) and ends below the water level (18) in the (first) vessel (11).

18. Equipment according to Claim 3 and/or one or more of the other claims, characterized in that a discharge pipe (24) for the (potable) water from the (second) vessel (15) is arranged on the side opposite the overflow pipe elbow (20) at such a height that the desired water level (21) (approximately at half the height of the drum reactor) is established.

19. Equipment according to Claims 16 to 18, characterized in that the feed pipe elbow (22), the overflow pipe elbow (20) and the discharge pipe (24) are arranged to be distributed, in a zig-zag shape relative to the plane of the vessels (11, 15), over diagonally opposite corner regions of the vessels.

**Fig. 1**

**Fig.2**

33

31

12, 14

40

37

31

34

37

32      32      30

31

*Fig. 3*

31

40      40

*Fig.6*

Fig. 4

4

Fig. 5

41

41

VII          VII

41

41

40          41

41

42    42    42

43    43

*Fig.7*

43    44    41

42

40

*Fig.8*